# DEMANDE DE BREVET EUROPEEN

(11) **EP 2 068 491 A1**
(43) Date de publication de la demande: **10.06.2009**
(21) Numéro de dépôt: 07301641.2
(22) Date de dépôt: 07.12.2007
(51) Int. Cl.: H04L 12/14, H04L 29/06, H04N 7/24, G06Q 30/00

(54) **Module d'identité d'un abonné et serveur de diffusion associé, adaptés pour mettre en oeuvre des modèles économiques complexes**

(71) Demandeur: GEMPLUS, 13420 Gémenos (FR)
(72) Inventeur: Praden, Anne-Marie, 13122, VENTABREN (FR)

(57) **Abrégé**

L'invention concerne un service à valeur ajoutée appliqué à la diffusion de programmes ou contenus de type vidéo, plus particulièrement à la télévision mobile (Mobile TV). L'invention favorise plus particulièrement la mise en place de modèles économiques complexes de type programme de fidélité en offrant une solution simple, efficace et mise en oeuvre principalement au niveau d'un module d'identité d'abonné en liaison avec un terminal mobile d'un utilisateur.

## Description

L'invention concerne un service à valeur ajoutée appliqué à la diffusion de programmes ou contenus de type vidéo, plus particulièrement à la télévision mobile (*Mobile TV*). Par l'intermédiaire de ce type de technologie, un utilisateur d'un téléphone mobile peut par exemple regarder un programme vidéo sur l'écran de son téléphone et l'écouter éventuellement au moyen d'une oreillette ou paire de lunettes communiquant, à l'aide d'une liaison filaire ou sans fil, avec ledit téléphone.
Pour offrir ce type d'application, des opérateurs de télécommunication utilisent des ressources dédiées telles un serveur de diffusion de vidéos (*TV broadcast server*), un réseau de radio télécommunication mobile et/ou un réseau de diffusion, des serveurs de contenus et un serveur distant pour contenir des secrets.
Les opérateurs utilisent, pour pouvoir facturer ledit service, un objet personnel pour authentifier l'utilisateur désirant bénéficier d'un service de télévision mobile. L'objet personnel est un module d'identité d'abonné, préférentiellement sous la forme d'une carte à puce, connue sous l'acronyme UICC (*Universal Integrated Circuit Card*). Cette carte supporte une application de type SIM (*Subscriber Identity Module*) en liaison avec le terminal de communication mobile. Le terminal de communication mobile se connecte à un réseau généralement de type GSM/GPRS (*Global System for Mobile communications* / *General Packet Radio Service*).
Le module d'identité d'abonné peut également se présenter sous la forme d'une carte de type MMC (*MultiMedia Card*) ou SD (*Secure Digital*), voire sous la forme d'un dongle ou clé connectée à un terminal au moyen, par exemple, du protocole USB (*Universal Serial Bus*). Ledit module, quel que soit son type, possède les données personnelles nécessaires pour que l'utilisateur puisse bénéficier du service de diffusion de programmes vidéo.

L'invention s'applique notamment, et de manière non limitative, aux réseaux de diffusion DVB (*Digital Video Broadcasting*), DMB (*Digital Multimedia Broadcasting*), ISDB-T (*Integrated Services Digital Broadcasting-terrestrial*) et MBMS (*Mobile Broadcast* Multicast *Service*). Les utilisateurs propriétaires de terminaux idoines reçoivent des programmes vidéo diffusés via de tels réseaux. Lesdits programmes sont diffusés sans distinction à l'ensemble de la flotte de terminaux. Si des programmes sont libres de droits (ou diffusés en clair) chacun peut les visualiser. D'autres programmes, dits payants, nécessitent un abonnement individuel par utilisateur. Si un utilisateur n'a pas souscrit un tel abonnement, il ne sera pas en mesure de visualiser le programme payant.

Les programmes vidéo sont diffusés sous la forme de flux continus, élaborés par un ou plusieurs fournisseurs de contenus. Le flux audio et le flux vidéo sont synchronisés au moyen de marqueurs temporels (*Timestamps*)*.*
Le service de diffusion peut toutefois être partiellement personnalisé au moyen notamment de l'ESG (*Electronic Service Guide*). Via l'ESG, on peut communiquer des informations caractérisant le programme vidéo, informations dont certaines sont affichables, sous la forme de menus, à l'écran du terminal. Il est en outre possible de transmettre, grâce à l'ESG, des informations tenant compte de localité géographique de l'utilisateur (dates de concerts par exemple). L'ESG apporte ainsi une interactivité aux programmes. L'utilisateur peut obtenir des informations complémentaires sur les programmes ou même être amené à voter durant un programme voire réaliser un achat électronique. Il peut également spécifier la langue des programmes qu'il souhaite visualiser. L'ESG est également un moyen de promotion intéressant pour l'opérateur de diffusion. L'interactvité peut également être véhiculée dans d'autres messages diffusés dits messages de notification.

Les contenus ou programmes dits payants sont transmis chiffrés. Une clé de trafic, permettant de déchiffrer le contenu, est transmise conjointement avec ledit contenu. La clé de trafic est variable dans le temps. Elle est, elle-même, chiffrée par le fournisseur de contenus. Pour déchiffrer la clé de trafic, et ainsi déchiffrer le contenu, le module d'identité d'abonné de l'utilisateur comporte une ou plusieurs clés de déchiffrement, dites clés de service. Pour disposer des clés de service, il est nécessaire que ledit utilisateur ait souscrit un abonnement.
L'abonnement peut être de différentes natures. Il peut être mensuel ou basé sur une période temporelle plus courte ou plus longue. L'utilisateur peut également faire le choix d'une formule de type « Pay-per-View » pour laquelle, il paie pour visualiser un programme particulier. Il existe d'autres formules comme l'achat de jetons consommés au fur et à mesure durant le temps de visualisation. La clé de service associée à un service de type « pay-per-view » est nommée PEK (*Program Encryption Key*). La clé de service associée à une durée d'abonnement est nommée SEK (*Service Encryption Key*). Les clés de service sont généralement communiquées via le réseau d'un opérateur de télécommunication, propriétaire du module d'identité de l'utilisateur. Les clés de service peuvent également être diffusées par le réseau de diffusion de contenu ou encore transmises en mode point à point sur un réseau de type WIFI (*Wireless Fidelity*) ou ADSL (*Asymetric Digital Subscriber Line*). Les clés de services reflètent la capacité de l'utilisateur à bénéficier de la visualisation et l'écoute de contenus.

D'autres formules plus complexes sont envisageables notamment pour tenir compte de la consommation de l'utilisateur dans le but de fidéliser celui-ci. Ainsi il peut être intéressant d'offrir un ou plusieurs contenus payants, à un utilisateur ayant consommé un nombre prédéterminé de contenus durant une certaine période ou après une certaine durée d'abonnement.
Ainsi, selon l'état de la technique, le fournisseur de contenu doit connaître l'état de la consommation d'un abonné pour l'autoriser ou non à bénéficier d'une offre promotionnelle et ainsi le fidéliser. Il est donc nécessaire de tracer la consommation d'un abonné au niveau des serveurs de contenus et se doter de procédés complexes pour générer des clés de service promotionnelles et les transmettre aux seuls abonnés « méritants ».

L'invention vise à résoudre les inconvénients de l'art antérieur en offrant une solution simple, mise en oeuvre principalement au niveau du module d'identité d'abonné en liaison avec le terminal d'un utilisateur. L'invention favorise ainsi la mise en place de modèles économiques complexes de type programme de fidélité appliqués notamment à la télévision mobile.

A cette fin, il est prévu un module d'identité d'un abonné à un service de diffusion de programmes payants, ledit module étant destiné à être intégré ou mis en liaison avec un terminal, lesdits programmes étant diffusés sous la forme d'au moins un message de contenu chiffré et d'au moins un message de clé, ledit au moins un message de clé véhiculant notamment un marqueur temporel et une valeur encodée d'une clé de trafic permettant audit terminal de déchiffrer lesdits messages de contenu chiffré,
ledit module comportant :
- une mémoire pour mémoriser et délivrer conjointement une clé de service et une période de validité associée à ladite clé de service;
- un moyen décodeur de clé pour déduire, de la valeur encodée en utilisant ladite clé de service, la valeur de la clé de trafic ;
- un moyen de contrôle de validité pour délivrer, au moyen décodeur de clé, la clé de service si, et seulement si, le marqueur temporel est compris dans la période de validité de ladite clé de service ;
- un moyen répartiteur pour recevoir ledit au moins un message de clé, extraire et transmettre notamment le marqueur temporel, la valeur encodée de la clé de trafic, respectivement au moyen contrôleur de validité et au moyen décodeur de clé ;
   ledit module d'identité d'abonné étant caractérisé en ce que :

- ledit module comporte en outre un moyen compteur de consommation pour cumuler des points de consommation de service de l'abonné ;
- et en ce que le moyen contrôleur de validité est adapté pour interagir avec ledit moyen compteur de consommation.
   Le moyen compteur de consommation peut créditer des points de consommation lorsque le moyen délivre une clé de service au moyen décodeur de clé.
   Eventuellement, le nombre de points de consommation crédité peut dépendre d'une information extraite par le moyen répartiteur, dudit au moins un message de clé, ladite information étant communiquée par le moyen répartiteur au moyen de contrôle de validité et étant représentative d'un bonus lié à la visualisation et/ou l'écoute du programme.
   En variante, le moyen de contrôle de validité peut être adapté pour mettre en oeuvre une comparaison entre le cumul des points de consommation comptabilisés par le moyen compteur et une information extraite par le moyen répartiteur, dudit au moins un message de clé, information représentative du nombre minimal de points de consommation nécessaire à la visualisation et/ou l'écoute d'un programme promotionnel, ledit moyen délivrant la clé de service au moyen décodeur de clé, si, et seulement si, ledit cumul de points de consommation est supérieur ou égal à ladite information extraite.
   Selon ce mode de réalisation, ladite comparaison peut être mise en oeuvre par le moyen contrôleur de validité si, et seulement, si le moyen répartiteur extrait dudit au moins un message de clé, une information représentative du caractère promotionnel du programme diffusé.

Le moyen compteur peut également soustraire du cumul des points de consommation, un nombre de points lié à ladite information représentative du nombre minimal de points de consommation nécessaire à la visualisation et/ou écoute d'un programme promotionnel.
Selon l'invention, il peut être prévu par ailleurs qu'une pluralité de clés de service, associées respectivement à une pluralité de périodes de validité puissent être enregistrées dans la mémoire du module d'identité. Ladite mémoire délivre, dès lors, l'une des clés de service et la période de validité associée, au moyen d'un identifiant extrait du au moins un message de clé, par le moyen répartiteur.
L'invention prévoit aussi un terminal pour visualiser un contenu, diffusé au moyen d'un réseau de diffusion pour télévision mobile. Dans ce cas, ledit terminal intégre la structure d'un module d'identité tel que décrit précédemment.
L'invention porte également sur un serveur de programmes payants, diffusés au moyen d'un réseau de diffusion, ledit serveur comprenant un moyen encodeur d'un contenu sonore et/ou visuel utilisant :
- une première clé de chiffrement pour chiffrer ledit contenu et délivrer au moins un message de contenu chiffré ;
- une seconde clé de chiffrement pour chiffrer ladite première clé de chiffrement et délivrer au moins un message de clé ;
dans lequel le moyen encodeur ajoute, dans ledit au moins un message de clé, une information représentative d'un caractère promotionnel ou non promotionnel du contenu diffusé.
En variante, il peut être prévu que moyen encodeur du serveur, ajoute dans ledit au moins un message de clé, une information représentative du nombre minimal de points de consommation nécessaire à la visualisation et/ou écoute d'un programme promotionnel.
Ledit moyen encodeur peut en outre ajouter, dans ledit au moins un message de clé, une information représentative d'un bonus lié à la visualisation et/ou l'écoute d'un programme non promotionnel.

D'autres caractéristiques et avantages apparaîtront plus clairement à la lecture de la description qui suit et à l'examen des figures qui l'accompagnent parmi lesquelles :
- la figure 1 présente un système connu de télévision mobile ;
- la figure 2 présente un système de télévision mobile selon l'invention ;
- la figure 3 décrit un message STKM selon l'art antérieur et selon l'invention.

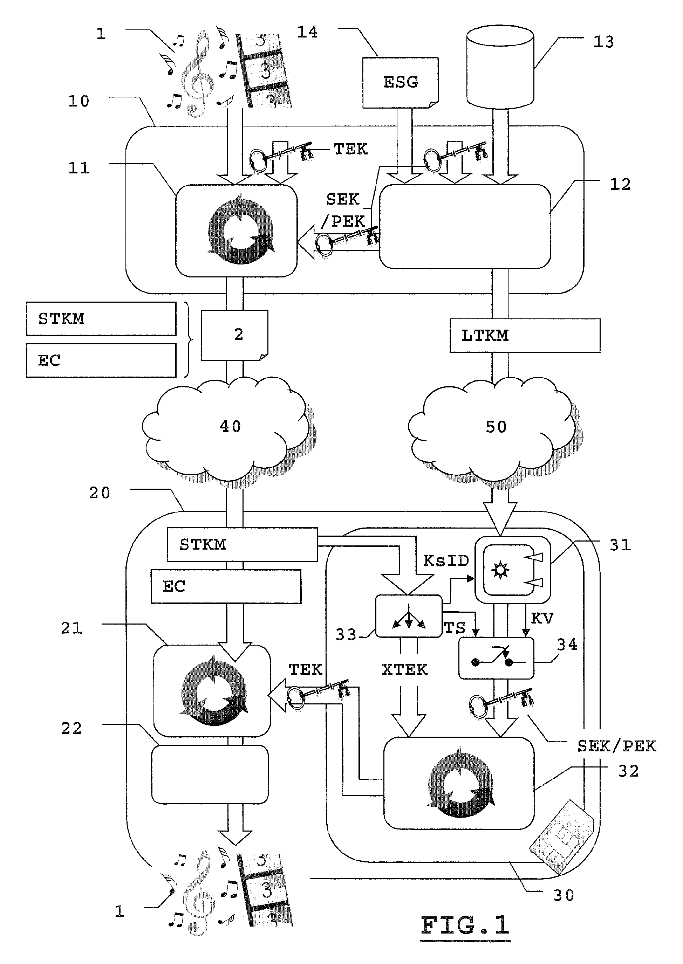

La figure 1 présente un système connu de télévision mobile. Les contenus payants 1 sont diffusés depuis un serveur 10. Les contenus 1 sont préalablement encodés au moyen d'un encodeur 11. Les contenus encodés 2 sont diffusés au travers d'un réseau de diffusion 40 de type DVB-H. Pour cela, l'encodeur 11 délivre des messages de contenu chiffré EC. L'encodeur 11 délivre en outre, associés audits messages de contenu chiffré, des messages STKM (*Short-Term Key Messages*) contenant notamment la valeur chiffrée XTEK d'une clé de trafic TEK (Traffic Key). La clé de trafic est une clé de déchiffrement qui sera utilisée in fine par le terminal 20 de l'abonné pour permettre la visualisation et l'écoute du contenu diffusé 1. La valeur XTEK véhiculée par les messages STKM est également encodée au moyen notamment d'une clé de service SEK (*Service Encryption Key*) ou PEK (*Program Encryption Key*).
La clé de chiffrement de contenu (donc la clé de trafic TEK associée) évolue régulièrement dans le temps. La clé SEK ou PEK évolue selon une période temporelle supérieure à celle de la clé TEK.
Les contenus diffusés via le réseau 40 sont réceptionnés par le terminal 20 d'un utilisateur ayant souscrit un abonnement pour bénéficier du service de télévision mobile. Le terminal 20 comporte, ou est en liaison avec un module d'identité d'abonné 30. Le module 30 se présente, de préférence, sous la forme d'une carte à puce de type UICC. Il pourrait être, en variante, totalement intégré au terminal. Le module 30 comporte une unité de traitement (non représentée sur la figure 1). Le module 30 comporte en outre une mémoire 31 dont l'accès en lecture et en écriture est réglementé. La mémoire 31 mémorise les valeurs de la clé SEK ou PEK. Cette clé est transmise au module d'identité 30 (via le terminal 20) au travers du réseau de radiocommunication 50 au moyen de messages LTKM (*Long-Term Key Messages*). Lesdits messages sont délivrés et diffusés par le serveur 10. Ce dernier tient compte d'informations relatives à l'abonnement de l'abonné mémorisées par le moyen 13. Les messages LTKM sont préparés au niveau du serveur 10 par un moyen 12 gestionnaire des abonnements. Des éléments ESG (*Electronic Service Guide*) sont également diffusés par les moyens 12 et 50. En variante, des éléments ESG peuvent également être diffusés par le moyen 40.
Le terminal 20 décode les messages de contenu chiffrés EC, au moyen d'un moyen 21 décodeur de contenu. Le moyen décodeur 21 utilise une clé TEK de déchiffrement de contenu, dite clé de trafic. Ladite clé TEK est délivrée par un moyen 32 décodeur de clé mis en oeuvre par le module d'identité 30. La clé TEK est déduite après décodage de la valeur XTEK contenue dans les messages STKM transmis par le terminal 20 au module d'abonné. Le moyen 32 décodeur de clé utilise, pour déduire la clé TEK, une clé SEK ou PEK dont la valeur est contenue dans une mémoire 31.
Les messages de contenu chiffré EC sont décodés par le moyen 21 décodeur de contenu et délivrés à des moyens 22 de rendus visuels et sonores du terminal afin que l'abonné puisse bénéficier du contenu payant 1 diffusé.

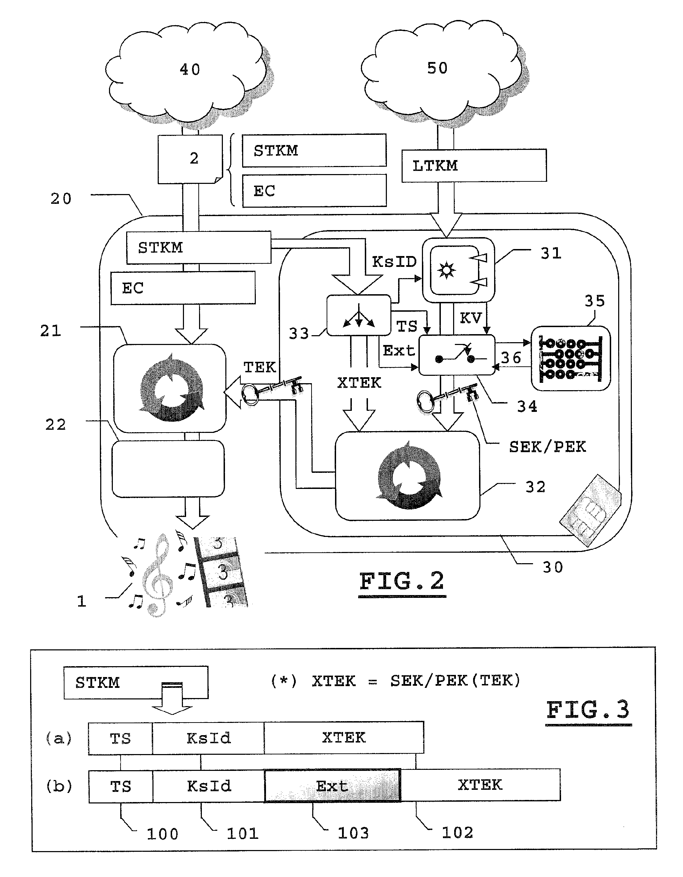

Il est possible de disposer d'une pluralité de clés PEK ou SEK dans la mémoire 31. Pour que le moyen décodeur 32 puisse déduire des messages STKM la clé TEK, lesdits messages STKM comportent en outre un identifiant KsID (*Service Key Identifier*) pour indiquer au module d'identité la clé PEK ou SEK qu'il doit utiliser. Cet identifiant KsID est décrit en liaison avec la figure 3 présentant la structure connue (a) d'un message STKM. Il correspond à l'élément 101 d'un message STKM. Cet identifiant est communiqué par l'intermédiaire éventuellement d'un moyen répartiteur 33 à la mémoire 31 pour que celle-ci délivre la clé SEK ou PEK désignée par l'identifiant. Le moyen répartiteur 33 peut se traduire sous la forme d'un bus unidirectionnel ou sous la forme de tout dispositif chargé de répartir le contenu des messages STKM aux différents constituants du module 30 d'identité de l'abonné.

Pour véhiculer la clé de trafic TEK préalablement encodée, un message STKM comporte un élément 102 contenant la valeur XTEK correspondant au résultat d'une fonction de chiffrement utilisant une clé SEK ou PEK. La notation « SEK/PEK(TEK) » représente ladite opération. L'élément 102 véhicule la valeur encodée XTEK de la clé TEK. Le moyen répartiteur 33, du module 30, transmet au décodeur 32 la valeur chiffrée XTEK de la clé TEK pour décodage.

Une clé SEK ou PEK peut être associée à une période de validité, notée KV. Cette information est transmise par le gestionnaire des abonnements 12 au travers du réseau 50 au moyen de messages LTKM. La période de validité est associée à une clé SEK ou PEK et est mémorisée dans la mémoire 31.
Un message STKM comporte, selon la figure 3, un élément 100 contenant la valeur d'un marqueur temporel. Pour pouvoir utiliser une clé SEK ou PEK et ainsi déduire une clé TEK, la valeur TS du marqueur temporel doit être comprise dans la période de validité associée à la dite clé SEK ou PEK. Un moyen 34 contrôleur de validité, compris dans le module 30 permet ainsi de délivrer au moyen décodeur 32 la clé SEK ou PEK uniquement dans le cas ou la valeur TS du message STKM est comprise dans la période de validité de la clé SEK ou PEK.
Si la valeur TS n'est pas comprise dans la période de validité KV, le moyen décodeur de clé 32 ne peut délivrer la clé TEK. Par conséquence, le moyen 21 décodeur de contenu, compris dans le terminal 20, ne peut déchiffrer les messages EC. Le programme ou contenu diffusé n'est pas délivré en clair à l'abonné par l'intermédiaire du moyen 22 du terminal 20, ledit moyen 22 étant chargé du rendu visuel et/ou sonore.

A titre d'exemple, selon l'art antérieur et en liaison avec la figure 1, quand un abonné a souscrit un abonnement pour une durée d'un mois à compter du 14 février 2007, l'opérateur transmet, via le gestionnaire 12 des abonnements, une clé SEK associée à une période de validité KV allant du 14 février 2007 au 13 mars 2007 compris. En variante, si l'opérateur préfère utiliser une clé SEK, valide au plus durant une semaine, il peut transmettre quatre valeurs de clé SEK respectivement associées aux périodes du 14 février 2007 au 20 février 2007, du 21 février 2007 au 27 février 2007, du 28 février 2007 au 6 mars 2007 et enfin du 7 mars 2007 au 13 mars 2007.
Lorsqu'un abonné souhaite acheter la visualisation d'un programme particulier, par exemple une rencontre de football diffusé le 14 février 2007, de 21h00 à 22h30, le gestionnaire 12 des abonnements délivre un message LTKM véhiculant une clé PEK associée à une période de validité comprise du 14 février 2007, 21h00 au 14 février 2007, 22h30.

Pour fidéliser ses abonnés ou pour mettre en oeuvre un programme promotionnel destiné à inciter lesdits abonnés à consommer des programmes d'un genre différent, l'opérateur s'appuie sur des modèles économiques plus ou moins complexes basés sur la consommation de service de ses abonnés.
Pour cela, selon l'art antérieur, le gestionnaire 12 des abonnements du serveur 10 doit être doté de moyens complexes, chargés de tracer les services consommés pour chaque abonné. Cela peut se traduire sous la forme d'un compteur de consommation par abonné au sein du gestionnaire 12 des abonnements. A partir d'un certain seuil de consommation, le gestionnaire 12 peut déclencher l'émission d'une clé SEK ou PEK associée à une période de validité donnée à destination du terminal de l'abonné. S'ensuivent une diffusion puis un encodage spécifique de contenus promotionnels par abonné ciblé par le geste commercial.
Le gestionnaire 12 doit effectuer ainsi une gestion complexe et fine par abonné. Cette solution est très couteuse et complexe à mettre en oeuvre.

L'invention propose de résoudre cet inconvénient en permettant de s'affranchir de toute gestion individualisée au niveau du serveur 10.
L'invention propose en liaison avec la figure 2 :
- d'enrichir le contenu des messages STKM ;
- d'adapter le module d'identité d'abonné 30 pour le doter d'un moyen 35 compteur de consommation de service ;
- d'adapter le moyen 34 de contrôle de validité pour qu'il interagisse avec ledit moyen 35 compteur de consommation.
   Le suivi individuel de la consommation de service se trouve ainsi décentralisé. Le moyen 35 compteur de consommation est simple car ne traite que la consommation de l'abonné titulaire du module 30.
   En outre, voir supra, la diffusion et l'encodage des programmes promotionnels, depuis le serveur 10, ne sont plus spécifiques à un abonné mais peuvent adresser l'ensemble des abonnés. C'est le module d'identité 30 de chaque abonné qui permettra ou non le décodage dudit programme. Le système dans son ensemble est donc simplifié, moins couteux et plus performant.

La figure 3 présente selon l'invention un message (b) de type STKM enrichi. Il comporte ainsi un élément 103 supplémentaire, nommé « Ext » pour « Extension ». Cet élément comporte une première information précisant que le message STKM est associé à un programme promotionnel. L'élément 103 comporte en outre une valeur minimale de points de consommation de service. Cette valeur minimale de points de consommation est nécessaire à la validation d'une clé de type PEK voire SEK, ladite clé étant associée au programme promotionnel. L'élément 103 peut comporter en outre un nombre de points, dits points de programme, caractérisant un bonus lié à la visualisation et/ou l'écoute du programme promotionnel. A l'issue de la visualisation dudit programme, ce nombre de points de programme est déduit du cumul de points de consommation de l'abonné.
Pour comptabiliser les points de consommation de service de l'abonné, le module 30 comporte, en liaison avec la figure 2, un moyen 35 compteur de consommation.
Ce moyen compteur 35 s'incrémente au fur et à mesure que l'abonné consomme des programmes ou des périodes de service. Le compteur peut disposer d'une liaison 36 pour interagir avec le moyen 34 contrôleur de validité. Ainsi, le moyen compteur 35 peut utiliser la liaison 36 pour comptabiliser le nombre de clés SEK ou PEK mises à disposition par le moyen 34 contrôleur de validité. Chaque fois qu'une clé SEK ou PEK a été utilisée pour décoder une clé de trafic TEK, le compteur 35 augmente d'une certaine valeur le nombre de points de consommation. Ledit moyen compteur 35 peut également tenir compte de l'étendue de la période de validité des clés utilisées. Une clé dont la période de validité est grande peut générer un nombre de points de consommation plus important qu'une clé dont la période de validité est courte. Il peut en outre être envisagé qu'une clé PEK puisse entrainer l'incrémentation d'un nombre de points plus important qu'une clé de service, traditionnellement plus économique. En variante, nous pouvons également imaginer que les messages STKM, associés à tout programme, puissent comporter dans l'élément 103 un nombre de points de programme caractérisant un bonus lié à la visualisation et/ou l'écoute dudit programme. Ainsi un premier programme non promotionnel peut entraîner un crédit de points de consommation plus important ou moindre qu'un second programme non promotionnel, eu égard au prix d'achat dudit programme ou à sa durée. Le moyen compteur 35 utilise dès lors cette information tirée, via le moyen répartiteur 33, du message STKM. Comme vu précédemment, si l'élément 103 d'un message STKM comporte l'indicateur « programme promotionnel », le moyen compteur 35 décompte ou débite le cumul de points de consommation d'un montant correspondant aux points de programme, eux-même contenus dans l'élément 103.
D'autres procédés peuvent être imaginés pour définir le modèle de crédit et/ ou débit de points de consommation associé au moyen compteur 35, sans apporter pour autant de limitations à la présente invention.

Au niveau du serveur 10, il suffit de coder un programme promotionnel au moyen d'une clé SEK ou PEK associée à une période de validité donnée et de préciser dans l'élément 103 des messages STKM associés audit contenu, que le programme diffusé est de type promotionnel. Ladite clé SEK ou PEK est transmise au préalable par le gestionnaire 12 des abonnements au moyen de messages LTKM.

Lorsque le programme promotionnel est réceptionné au niveau du terminal 20 de l'abonné, les messages STKM sont transmis au module d'identité de l'abonné 30. Au moyen éventuellement d'un indicateur de clé KsID, la mémoire 31 délivre la clé identifiée et sa période de validité au moyen 34 chargé de contrôler la pertinence du marqueur temporel TS au regard de la période de validité de clé. Dans le cas où le marqueur de temps est pertinent ou valide, le moyen 34 contrôleur de validité met en oeuvre un test supplémentaire avant de délivrer ladite clé. Il compare ainsi la valeur minimale de points de consommation nécessaire à la visualisation du programme promotionnel - valeur minimale contenue dans l'élément 103 du message STKM et transmise par le moyen répartiteur 33 - au cumul des points de consommation comptabilisés par le moyen compteur 35. Ledit cumul de points de consommation est transmis via la liaison 36 au moyen 34 contrôleur de validité.
Si la valeur minimale de points de consommation nécessaire à la visualisation du programme promotionnel est inférieure ou égale au cumul de points de consommation de l'abonné, le moyen 34 contrôleur délivre la clé idoine SEK ou PEK au moyen 32 décodeur de clé. La valeur minimale de points de consommation nécessaire à la visualisation du programme peut alors être débitée du cumul des points de consommation de l'abonné par le moyen compteur 35.
Si la valeur minimale de points de consommation nécessaire à la visualisation du programme promotionnel est supérieure au cumul de points de consommation de l'abonné, le moyen 34 contrôleur ne délivre pas la clé idoine SEK ou PEK au moyen 32 décodeur de clé. Le cumul des points de consommation de l'abonné du moyen compteur 35 reste inchangée. L'abonné ne peut bénéficier du programme promotionnel.

Lorsque un programme non promotionnel est réceptionné au niveau du terminal 20 de l'abonné, les messages STKM comportent, dans l'élément 103, non pas une valeur minimale de points nécessaires à la visualisation, mais un nombre de points qui pourront être comptabilisés par le moyen compteur 35 uniquement si le moyen 34 chargé de contrôler la pertinence du marqueur temporel TS au regards de la période de validité de clé associée au programme délivre ladite clé. Ce nombre de points est représentatif d'un bonus lié à la visualisation et/ou l'écoute du programme. Ce bonus peut également être conditionné par des informations découlant d'un historique de la consommation de services effectuée par l'abonné. Lesdites informations relatives à l'historique peuvent être communiquées au moyen 34 contrôleur de validité par un moyen journal (non représenté), contenu et mis à jour par le module d'identité d'abonné 30.

Dans le cadre d'un programme non promotionnel, l'élément 103 du message STKM ne comporte pas l'indicateur « programme promotionnel ».

## Revendications

1. Module d'identité (30) d'un abonné à un service de diffusion de programmes payants (1), ledit module étant destiné à être intégré ou mis en liaison avec un terminal (20), lesdits programmes étant diffusés (40) sous la forme d'au moins un message (EC) de contenu chiffré et d'au moins un message (STKM) de clé, ledit au moins un message de clé véhiculant notamment un marqueur temporel (TS) et une valeur encodée (XTEK) d'une clé de trafic (TEK) permettant audit terminal de déchiffrer lesdits messages (EC) de contenu chiffré,
ledit module comportant :
- une mémoire (31) pour mémoriser et délivrer conjointement une clé de service (SEK/PEK) et une période de validité (KV) associée à ladite clé de service;
- un moyen (32) décodeur de clé pour déduire de la valeur encodée (XTEK) en utilisant ladite clé de service (SEK/PEK), la valeur de la clé de trafic (TEK) ;
- un moyen (34) de contrôle de validité pour délivrer au moyen (32) décodeur de clé, la clé de service (SEK / PEK) si, et seulement si, le marqueur temporel est compris dans la période de validité de ladite clé de service ;
- un moyen répartiteur (33) pour recevoir ledit au moins un message (STKM) de clé, extraire et transmettre notamment le marqueur temporel, la valeur (XTEK) encodée de la clé de trafic, respectivement au moyen (34) contrôleur de validité et au moyen (32) décodeur de clé ;
ledit module (30) d'identité d'abonné étant
**caractérisé en ce que :**
- ledit module (30) comporte en outre un moyen (35) compteur de consommation pour cumuler des points de consommation de service de l'abonné ;
- et **en ce que** le moyen (34) contrôleur de validité est adapté pour interagir (36) avec ledit moyen (35) compteur de consommation.

2. Module selon la revendication 1 **caractérisé en** le moyen (35) compteur de consommation crédite des points de consommation lorsque le moyen (34) délivre une clé de service au moyen (32) décodeur de clé.

3. Module selon la revendication 2 **caractérisé en ce que** le nombre de points de consommation crédité dépend d'une information extraite par le moyen (33) répartiteur, dudit au moins un message (STKM) de clé, ladite information étant communiquée par le moyen (33) répartiteur au moyen (34) de contrôle de validité et étant représentative d'un bonus lié à la visualisation et/ou l'écoute du programme.

4. Module selon l'une quelconque des revendications 1 à 3, **caractérisé en ce que** le moyen (34) de contrôle de validité est adapté pour mettre en oeuvre une comparaison entre le cumul des points de consommation comptabilisés par le moyen compteur (35) et une information (Ext, 103) extraite par le moyen (33) répartiteur, dudit au moins un message (STKM) de clé, information représentative du nombre minimal de points de consommation nécessaire à la visualisation et/ou l'écoute d'un programme promotionnel, ledit moyen (34) délivrant la clé de service au moyen (32) décodeur de clé, si, et seulement si, ledit cumul de points de consommation est supérieur ou égal à ladite information extraite.

5. Module selon la revendication 4 pour lequel ladite comparaison est mise en oeuvre par le moyen (34) contrôleur de validité si, et seulement si, le moyen répartiteur (33) extrait dudit au moins un message (STKM) de clé, une information (Ext, 103) représentative du caractère promotionnel du programme diffusé.

6. Module selon la revendication 4 ou 5 **caractérisé en que** le moyen compteur (35) soustrait, du cumul des points de consommation, un nombre de points lié à ladite information (Ext, 103) représentative du nombre minimal de points de consommation nécessaire à la visualisation et/ou écoute d'un programme promotionnel.

7. Module selon l'une quelconque des revendications 1 à 6 **caractérisé en ce que :**
- la mémoire (31) mémorise une pluralité de clés de service (SEK / PEK) associées respectivement à une pluralité de périodes de validité (KV) ;
- et ce que la mémoire (31) délivre l'une des clés de service (SEK / PEK) et la période de validité (KV) associée, au moyen d'un identifiant (KsID) extrait, du au moins un message (STKM) de clé, par le moyen répartiteur (33).

8. Terminal (20) pour visualiser un contenu diffusé (1) au moyen d'un réseau de diffusion (40) pour télévision mobile **caractérisé en qu'**il intègre un module d'identité selon l'une quelconque des revendications 1 à 6.

9. Serveur de programmes payants diffusés au moyen d'un réseau de diffusion (40) comprenant un moyen (11) encodeur d'un contenu sonore et/ou visuel (1) utilisant :
- une première clé de chiffrement pour chiffrer ledit contenu et délivrer au moins un message (EC) de contenu chiffré ;
- une seconde clé de chiffrement pour chiffrer ladite première clé de chiffrement et délivrer au moins un message (STKM) de clé ;
**caractérisé en ce que** le moyen encodeur (11) ajoute, dans ledit au moins un message (STKM) de clé, une information (Ext, 103) représentative d'un caractère promotionnel ou non promotionnel du contenu diffusé.

10. Serveur selon la revendication 9 **caractérisé en ce que** le moyen encodeur (11) ajoute, dans ledit au moins un message (STKM) de clé, une information (Ext, 103) représentative du nombre minimal de points de consommation nécessaire à la visualisation et/ou écoute d'un programme promotionnel.

11. Serveur, selon la revendication 9 ou 10, **caractérisé en ce que** le moyen encodeur (11) ajoute, dans ledit au moins un message (STKM) de clé, une information (Ext, 103) représentative d'un bonus lié à la visualisation et/ou l'écoute d'un programme non promotionnel.
